# EUROPEAN PATENT APPLICATION

(11) **EP 4 641 246 A1**
(43) Date of publication of application: **29.10.2025**
(21) Application number: 24171713.1
(22) Date of filing: 22.04.2024
(51) Int. Cl.: G01S 7/06, G01S 13/90

(54) **SPECTRAL SYNTHETIC APERTURE RADAR SIGNAL PROCESSING**

(71) Applicant: Iceye Oy, 02150 Espoo (FI)
(72) Inventor: NOTTINGHAM, Matthew, 02150 Espoo (FI); MUFF, Darren, 02150 Espoo (FI); IGNATENKO, Vladimir, 02150 Espoo (FI); RADIUS, Andrea, 02150 Espoo (FI)
(74) Representative: Crowell & Moring U.K. LLP

(57) **Abstract**

SAR data is acquired at one or more satellites after the transmission of radio energy pulses from the one or more satellites over a range of frequencies. The data is processed by forming images using data from respective blocks of the SAR data, each block corresponding to a different frequency range of the transmitted radiation, each range having a different centre frequency. The images are then analysed for features that appear different between one image and another This can be done by colouring the images using a different colour for each of the different frequency ranges and combining the images to form a composite image. Some differences in frequency response between one frequency range and another will then appear with a predominant colour. Alternatively, the images, whether or not coloured, may be examined in sequence, such as a video, where the same differences will appear as movement.

## Description

This invention is in the field of synthetic aperture radar "SAR" signal processing.

### Background

Synthetic Aperture Radar (SAR) is a form of radar that can be used to image an area on Earth by transmitting radar pulses and recording the return echoes (or signals) from those transmitted beams. SAR systems can be installed on airborne platforms such as aircraft, as well as in satellites operating from space. Various modes of operating the SAR can be used, such as stripmap, spotlight, and ScanSAR (Scanning Synthetic Aperture Radar).

A SAR that is carried on an airborne or space-borne platform typically moves with respect to a ground-based target to be imaged whilst it is imaging that target. As the platform moves, the SAR antenna location relative to the target changes with time. The movement of a relatively small antenna during imaging forms a "synthetic" aperture that can provide similar resolution to much larger antennas, by exploiting the change in frequency of received signals changes due to the Doppler effect.

Data generated from the use of SAR technology contains a wealth of information about the area being observed. For example, SAR data can be used for imaging, change detection, and for identifying and classifying different types of objects and materials. SAR resolutions and revisit times also continue to improve, providing the opportunity to see smaller features and to glean new and unexpected information from the resulting data. SAR is particularly advantageous for Earth observation because, unlike optical imagery, it can be obtained irrespective of light, weather, cloud and smoke conditions. However, some of the wealth of information potentially contained within the data from modern Earth observation SAR systems remains untapped. New ways of processing the SAR data are required to fully exploit this information and to reveal new information about the areas, terrain, and objects being observed.

### Summary

The invention is defined by the claims.

In the following there are described methods of processing SAR data acquired at one or more satellites after the transmission of radio energy pulses from the one or more satellites over a range of frequencies. Images are formed using data from respective blocks of the SAR data, with each block corresponding to a different frequency range of the transmitted radiation, each range having a different centre frequency. The images may be used in various ways discussed further below. In particular, the images may be analysed for anomalies such as features that appear differently between one image and another.

The methods described here may be implemented using a computer algorithm and therefore there is also provided a computer readable medium, either transitory or non-transitory, comprising instructions which, when implemented in a computing system, cause the system to implement any of the methods described here.

### Brief Description of the Drawings

Embodiments of the invention will be described, by way of example only and with reference to the following drawings, in which:
Figure 1a is a satellite image formed by combining coloured images;
Figure 1b is an enlarged view of part of figure 1a;
Figure 1c is an enlarged view of another part of figure 1a;
Figure 2 is a flowchart showing basic operations of a method of processing SAR data in which images are formed from respective blocks of SAR data as described here;
Figures 3 to 6 are a series of flowcharts showing a detailed example of the method shown in figure 2;
Figure 7 is a schematic diagram of a satellite operating in spotlight mode;
Figure 8 is a schematic diagram of a computing system in which the processing of SAR data may be implemented.

### Detailed Description

GB2608851B discloses a satellite in which the attitude determination and control system "ADCS" is configured for mechanically steering the satellite in the azimuth direction to prolong a dwell time, during which a selected target is visible from the satellite, as the satellite orbits over the target. As a result, more data is available from the target which may be processed in different ways.

This prolonged dwell time opened up the possibility to split the synthetic aperture into along-track observations (sub-apertures or 'looks'). These could be used in a number of ways, one of which was to combine looks into a 'color-subaperture image' or CSI.

As SAR systems evolve, the increased need for finer resolution means that the systems are required to transmit a larger range of frequencies (bandwidth). Satellites are being developed which operate with a 1.2GHz bandwidth centred on 9.8 GHz, designed to provide a slant range resolution of 12.5 cm.

The methods described here arose from attempts to identify sources of interference and noise by using a new technique of processing SAR data obtained by the extended dwell time acquisition described in GB2608851B. The new technique was found to be particularly useful in new wider bandwidth acquisitions of SAR data from a new SAR satellite using a 1.2 GHz bandwidth system. For example, due to the wider bandwidth, in addition to the reflected radiation that a SAR system is designed to acquire, it might acquire additional radiation that causes noise in the image, for example coming from radio frequency transmissions on Earth or in the atmosphere, or even resulting from transmissions from other satellites. In order to identify and locate such sources, the captured SAR data was divided into "sub-apertures" or "looks" by frequency by processing the SAR data. Each sub-aperture corresponded to a "block" of the SAR data, with each block corresponding to a different frequency range of the transmitted radiation, each range having a different centre frequency., Each sub-aperture was used to form a separate image. The images were then analysed for features that appear stronger, or differently, in some of these frequency sub-aperture images than in others.

In one example, each frequency sub-aperture was coloured with different colours, and the coloured images were combined to form a composite image. The expectation was that the composite image would be mainly grey because within the frequency range being transmitted and detected, normal features such as terrain and objections on the ground were expected to backscatter and reflect the transmitted SAR signal roughly equally across the range of frequencies being transmitted and received, but that any source of interference, being limited in its frequency range, would take on the color that corresponds to the look it was in.

In fact, the surprising result was that the composite image highlighted particular features on Earth. Different features appeared with different colours. Closer inspection revealed that at least some of these features were objects with a repeating radar reflecting structure, and the highlighting was due to Bragg scattering. In the first images generated in this way a dominant source of colour was from a chain link perimeter fence.

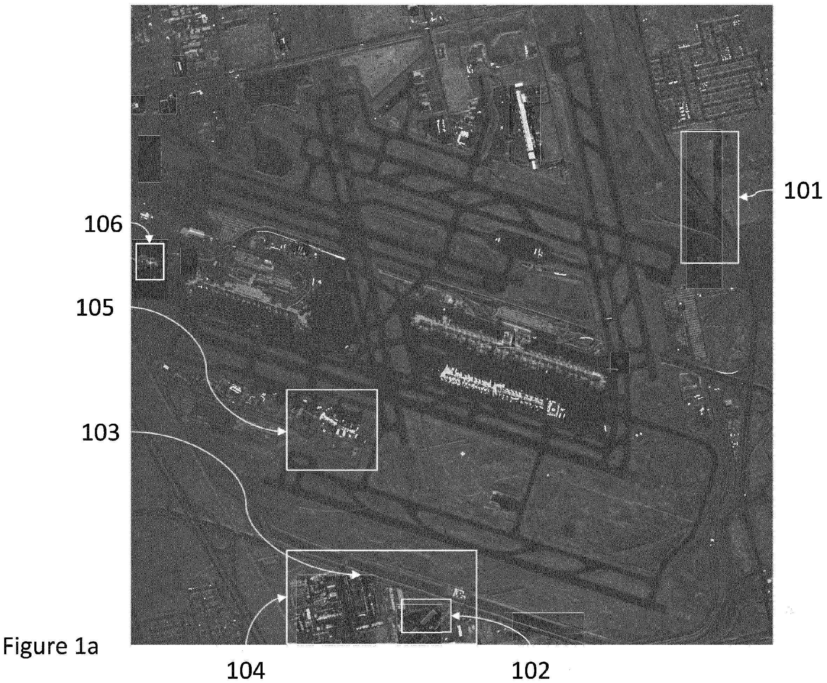

Figure 1a is a satellite image of an airport formed by combining coloured images, derived from three equal non-overlapping sub-apertures coloured red, blue and green. Most of the image is in greyscale but a number of areas and lines appear coloured. A red area 101 to the right of the figure is a SAR artifact caused by a bright target 106 that has a strong response at the red part of the spectrum. A green rectangular area 102 corresponds to a corrugated roof and a green line 103 corresponds to a chain link fence.

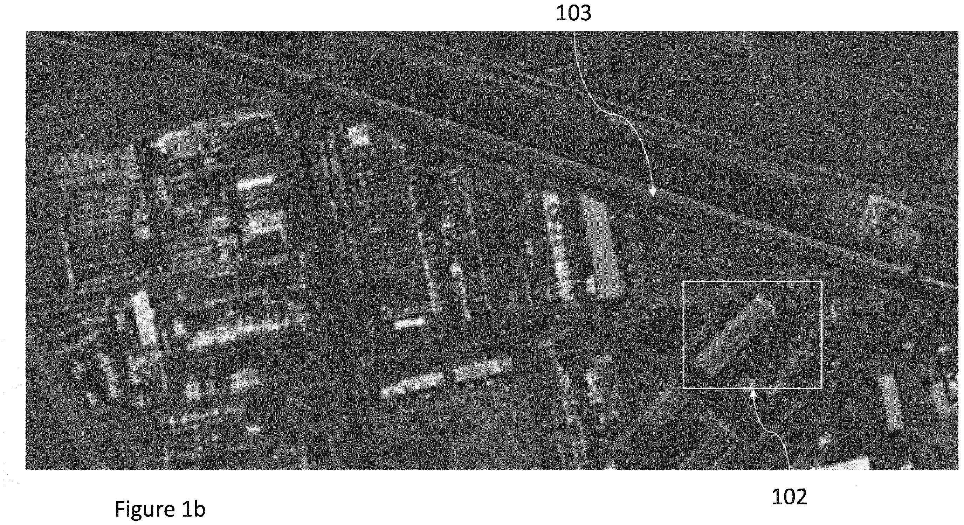

Figure 1b is an enlarged view of area 104 of figure 1a where the roof and fence are more clearly visible. The roof 102 appears in a green colour that indicates that the roof of the building may be made of some material or design that provides greater reflectivity in the frequency range of the green sub-aperture than in other frequencies. This could be due to a repeating pattern in the roof, for example a corrugated roof. Without the colouring and combining of the images, making the fence 103 stand out from the rest of the grey image, it would be virtually invisible and hard to identify.

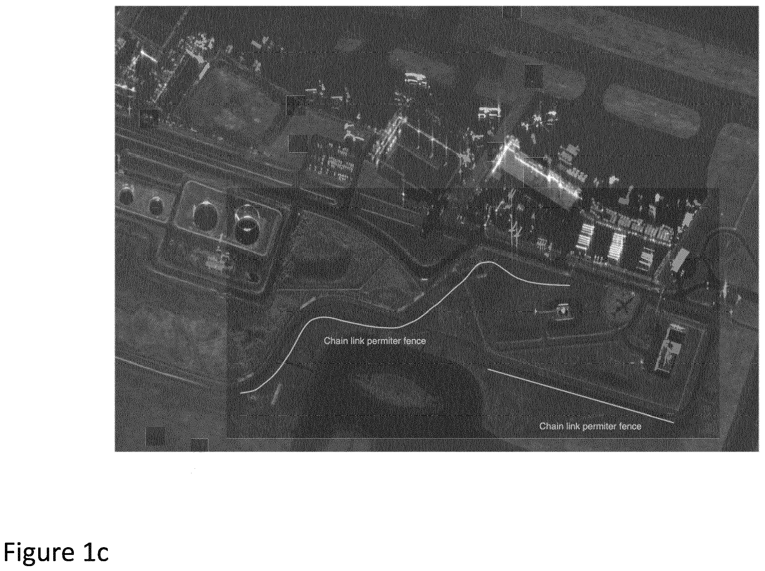

Figure 1c is an enlarged view of area 105 of figure 1a where the locations of two other lengths of chain link fence are underlined. This image was acquired via an extended dwell mode, which provides very good resolution such that small features are visible, with a slant range resolution that can be as good as 12.7 cm, in the case of acquiring data with a bandwidth of 1.2 GHz. Other typical resolutions may be 0.25m, 0.5m or 1m. However, even with these levels of resolution, smaller features such as chain link fences that are narrow can be difficult to see and identify. By exploiting the fact that the response from such fences is frequency dependent, for example due to the regular repeating pattern of the chain links causing Bragg scattering, features can be seen and identified that would otherwise be difficult to spot in a SAR image.

The methods described here process SAR data acquired at one or more satellites after the transmission of radio energy pulses from the one or more satellites over a range of frequencies. It is evident from the above that the SAR data may result from backscattering or reflection of the transmitted radio energy pulses, or it may result from sources of interference, for example not originating at the satellite(s).

Images are formed using data from respective "blocks" of the SAR data, each block corresponding to a different frequency range of the transmitted radiation, each range having a different centre frequency. The transmitted radiation will usually originate from the same satellite, in which case the received radiation may be divided into the blocks. Each block corresponds to a sub-aperture or look of the SAR.

However, the transmitted radiation may originate from different satellites, for example operating in different frequency bands, in which case it may be acquired in blocks such that no division is required.

The images may then be analysed for anomalies, in particular features that appear differently from one image to another. The analysis may be done in various ways. This analysis may be by human eye. An advantage of some of the methods described here is that these differences are readily identifiable by eye and do not require complex processing in order to be identified. The source of the anomalies may also be identified, such as the chain link fence and other examples to be described further below. Additionally, or alternatively, computer implemented image processing techniques may be used in order to identify anomalies and/or their sources.

For the purpose of analysis, as noted above the images may be coloured using a different colour from the visible spectrum for each of the different frequency ranges. Additionally, or alternatively the analysis may comprise combining the images in any of various ways. One possibility is to combine differently coloured images to form a composite image. Differences in frequency response between one frequency range and another would then appear as deviations from the expected grey. Additionally, or alternatively, the images may be analysed as a sequence, for example stepping through the images by frequency. For example, the images may be used as frames in a video sequence which may step through the frequencies of the sub-apertures. The image sequence may be in frequency order. Differences in frequency response between one frequency range and another would then appear as a variation from one image to the next, such as flickering in a video sequence

The methods described here can be used for any object or material with non-uniform radar return over the frequency band. The Bragg effect can accentuate this non-unform radar return for objects and features with certain properties and therefore the methods are particularly good for, but not limited to, repeating structures where the Bragg effect occurs when imaged using SAR.

The methods described here include new ways of using such images and acquiring the data for such images.

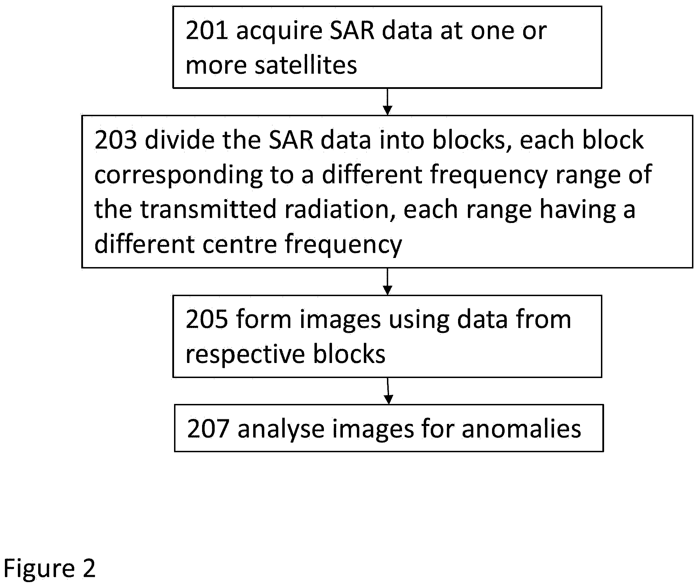

Figure 2 is a flow chart showing basic operations of a method of processing SAR data in which images are formed from respective blocks of SAR data.

The method of figure 2 begins at step 201 with the acquisition of the SAR data at one or more satellites, after the transmission of radio energy pulses from the one or more satellites over a range of frequencies. This is not essential to all of the methods described here, which may include processing of SAR data already acquired, for example SAR data received at a ground station.

At step 203 the SAR data is divided into blocks, each corresponding to a different frequency range within the range of the transmitted radiation and each range having a different centre frequency. This step may be performed in a computing system onboard a satellite but more usually would take place in a computing system on Earth, for example at one or more ground stations during processing of the SAR data. This step is not always essential. In some methods, the data may be separated into the blocks prior to receipt for processing. In some methods, different blocks may be received from different satellites. The different satellites may operate at different frequencies, for example in different radio bands.

At step 205 images are formed using data from respective blocks. At step 207 the images are analysed for differences .

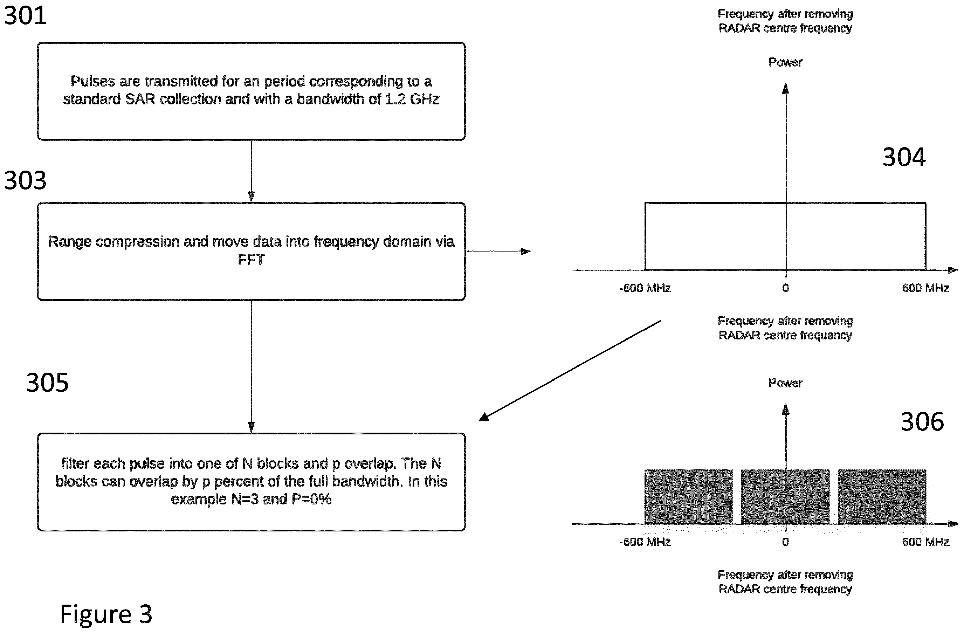

A specific example of the method shown in figure 2 will now be described with reference to figures 3 to 6. This example begins at 301 with the transmission of pulses from a single satellite, using a 1.2 GHz bandwidth which is the current regulatory limit for X-band SAR used for Earth observation. A suitable centre frequency is 9.8Ghz in which case the frequency range is 9.2-10.4 GHz. The methods described here benefit from the additional data collected over a wider bandwidth and therefore a bandwidth of more than the current commonly used 600MHz is advantageous, although it is expected that useful results could be obtained at lower bandwidths.

As noted elsewhere here, in other examples the transmission may be from multiple satellites.

Satellite data is then acquired following the transmission which consists of backscattering of the transmitted radiation, possibly with interference. At 303 the acquired data is subjected to range compression, as is known in the art, using a fast Fourier transform, to compress the transmitted pulses. The radar centre frequency may be removed, in other words subtracted from the range compressed data, for example to simplify subsequent data processing. The graph 304 schematically shows the result of this subtraction, or range shift, showing frequencies from -600 to +600 MHz, with approximately equal power.

Each frequency-transformed pulse is then divided into multiple pulses. In figure 3 this is shown to be done by filtering. Each pulse may be filtered, or divided, into N blocks and p overlap, where N is an integer. The blocks may overlap by p percent of the full bandwidth. Examples have been carried out using N = 3 and p = 0, as illustrated schematically by the graph 306. If p=0 the blocks are contiguous in frequency. In another example, blocks that have a frequency gap between them could be used.

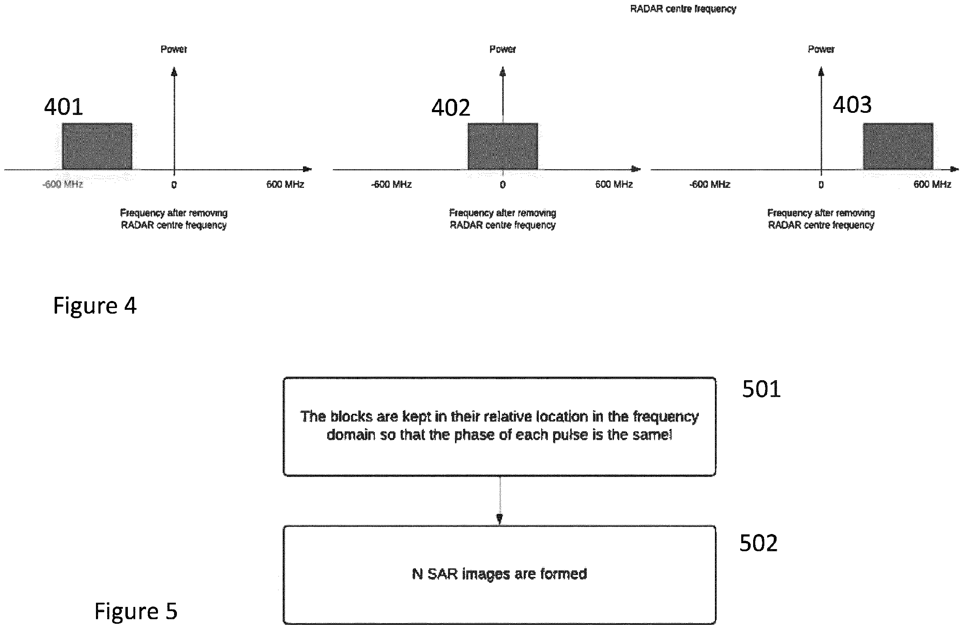

The formed blocks are shown separated in figure 4. This shows that the blocks 401, 402, 403 are kept in their relative position in the frequency domain so that the phase of each pulse is the same. Thus, the left and right blocks have bandwidths entirely in the negative and positive frequency regions respectively rather than being centred on zero.

The flow continues from figure 4 to figure 5, in which, with the blocks in their relative positions in the frequency domain as indicated at 501, a SAR image is formed at step 502 using each of the N blocks of data.

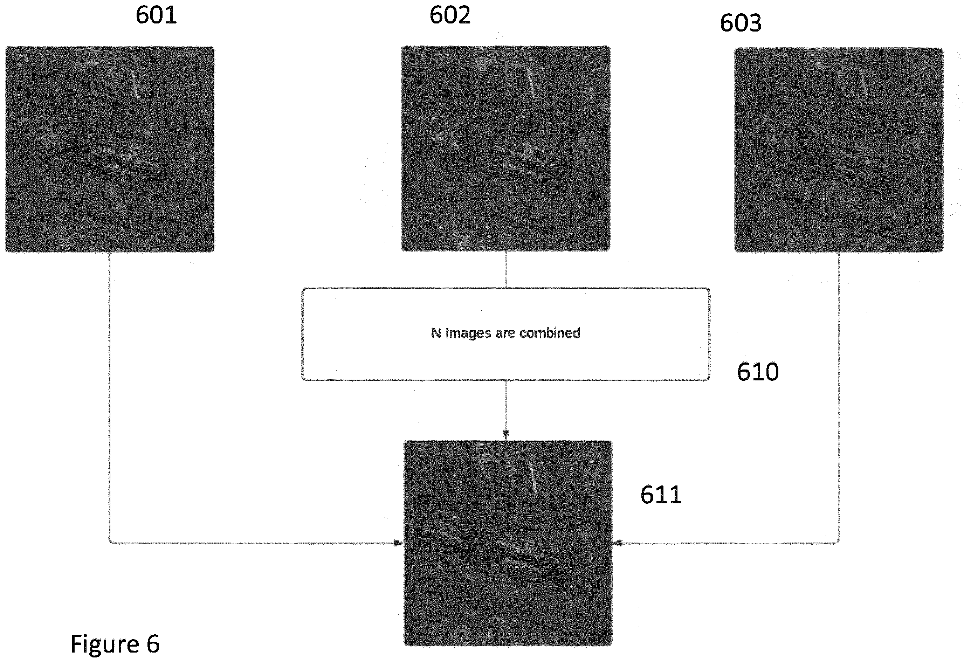

Figure 6 shows an example of images 601, 602, 603 formed from respective data blocks 401, 402, 403. In this example, the three images are coloured using a different colour from the visible spectrum. The order of the colours may match the order of the frequencies of the frequency ranges to which the blocks correspond. Thus, in the illustrated example the image generated from the lowest frequency data block is coloured with the lowest frequency of the chosen visible colours red for image 601, green for image 602 and blue for image 603.

As few as 2 blocks may provide useful information but for improved results the number of blocks may be equal to or larger than 3. The blocks may correspond to equal width frequency ranges. This is useful to ensure that the resolution of the images is the same.

The images are combined at operation 610 to form a composite image 611 of a target area, also shown in figures 1a and 1b. The ability to correctly shift the 'range look' so that its phase is the same as that corresponding to the original full bandwidth pulse allows the individual 'looks' to be aligned and stacked correctly in the composite image. As noted above, apart from sources of interference, it was expected that the composite image would be grayscale. However the result was that unexpected anomalies appeared in the form of certain features appearing in a predominant one of the colours used, which could be readily identified by eye.

This effect is enhanced by the application of colours and range look weightings to the data blocks such that a uniformly scattering object has a consistent response across the full spectrum so that the resulting composite image retains an overall greyscale hue.

Following on from this it was realised that the use of colour is not essential for the identification of differences in frequency response between one frequency range and another. If the images are the same colour and are examined in sequence, the same differences that appeared in a particular colour will be revealed by comparing the images. The images may be used as frames in a video to facilitate this comparison.

The methods described here may be used to help a user to identify features in SAR images that are frequency dependent. Features that have a RADAR response that varies with wavelength (frequency) can be identified. As noted above, differences between one frequency sub-aperture image and another can be particularly pronounced where Bragg scattering occurs, which can arise from features with repeating structures, usually human made, such as chain link fences. The Bragg scattering results from the repeating structure resonating with one of the wavelengths of the incident SAR signal. More precisely, the reflected radar waves inside a resolution cell (or pixel) reflect off objects that have some spacing approximately equal to or at an integer multiple of the wavelength spacing. When this occurs the reflected and backscattered waves combine coherently to produce constructive interference, which can provide a bright return at that particular wavelength. For example, in the case of the chain link fence, the wavelength of the X-band SAR signal (which is the inverse of frequency) goes from roughly 2.4 to 3.75 cm, and Bragg scattering can cause a strong return at a certain frequency if the chain link fence has links that repeat with a distance that is within this range of wavelengths or that is an integer multiple of a wavelength that is within this range. Other structures found in the example SAR images to exhibit Bragg scattering include some roofs and concrete runway blocks. Many other types of objects and features, both man-made and natural, may result in frequency dependent returns due to Bragg scattering.

Therefore, any of the methods described here may be used to identify structures having a repeating radar structure, with the range of frequencies and/or angle of incidence being chosen based on the repeat length, or period, of the structure to induce Bragg scattering. Note that the frequency at which Bragg scattering occurs can be dependent on the angle from which the structure is being viewed, i.e. the angle of incidence of the radio energy pulses, so this must be taken into account. This is evident in Figure 1C, which shows both a straight section of chain-link fence as well as a section of chain link fence that has some curves in it. Presumably, the fence is of similar design and construction. However, in the case of the straight fence, it shows up uniformly as one colour (blue), meaning that it reflects back most strongly at a wavelength/frequency within the frequency range that is represented by that colour. The curved part of the fence, on the other hand, exhibits some sections that reflect strongly in a different frequency range as highlighted by the fact that they are shown in another colour (green). Other parts of the fence appear grey and are not highlighted by any colour at all. This may be due to the difference in angles that these sections of fence are being viewed at. In the straight fence, the imaging angle is roughly consistent along the fence, so it would be expected that the strong return would be consistently in one frequency because the repeating pattern of the chain links would be expected to be roughly constant. On the other hand, parts of the fence that are at other angles might appear to have longer or shorter repeating patterns due to geometry and can reflect strongly in a slightly different frequency as a result. The grey sections of fence may indicate that perhaps Bragg scattering is not occurring in these parts of the fence at all due to the angle they are being viewed it. For example, the imaging angle may be more aligned the length of the fence, meaning that the repeating pattern could be very small or even not visible at all.

The radar pulses may be transmitted from multiple satellites, for example satellites operating in different radio bands. The methods described here may be implemented with SAR systems configured to transmit in any of X band, C band, L band, or Ka band. The range of frequencies used to obtain the blocks of data may all be within one of these bands or may span multiple bands. In the examples presented here, the range of frequencies are all within the X band range of frequencies, which is from 8 GHz to 12 GHz.

The transmission and acquisition of pulses may be performed using one or more phased array antennas. The effective radar aperture depends on the area of the one or more antennas, in other words the greater the total antenna area the greater the "aperture" of the SAR. In synthetic aperture radar, relative movement between the SAR platform and the target is used to "synthesize" a much larger radar aperture than the actual physical dimensions of the aperture. The aperture is also referred to in the art as the satellite receive window. The example images described here were obtained using a satellite with a phased-array antenna, in which multiple antenna patches are located on a planar structure pointing towards the Earth. However, the methods could also be used on imagery obtained with a satellite using a SAR reflector antenna, where the radar signal is emitted from a central location onto a large reflector before being sent to the Earth.

The acquisition of the data for use in the methods described here is facilitated if the data is acquired by a single satellite, further if the data is acquired in a single acquisition, in other words a single pass of the satellite over the target area. Methods of acquiring data in this way are described in GB2608851B.

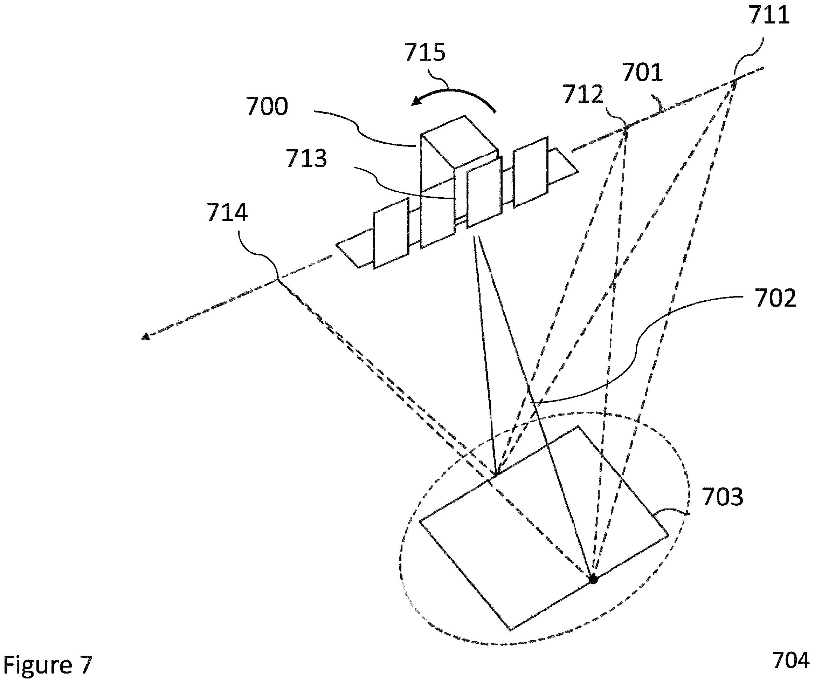

Figure 7 is a schematic diagram of a satellite 700 operating in spotlight mode. Notably, unlike optical satellites, SAR satellites are typically side-looking, because the strong specular reflection of the radar signal from the nadir when looking straight down would swamp out the backscattered returns of other features. In the example of figure 7, the pulses are transmitted and received in a direction to the left, relative to the direction of travel of the satellite.

The dotted line 701 in figure 7 indicates the azimuth direction and the lines 702 indicate a slant range direction. Slant range is the distance from the satellite to a point in the target area along a line perpendicular to the azimuth direction. Ground range is the slant range projected onto the ground plane.

Figure 7 shows in exaggerated form the variation of angle of a satellite 700 in order to extend the dwell time over a target area 703, in this case an area on the earth. Traditionally, a SAR satellite would stay fixed in the orientation shown by the satellite 700 in position 713 as it travels along line 701 in the azimuth direction. As it travels, it would image to the side in a side-looking matter at a certain look angle, ranging from approximately 10 degrees up to approximately 45 degrees. This mode is known as strip mode, and the resulting image would be a long and narrow strip map, of which area 703 would be a part of. If information about area 703 is what is really desired rather than the entire strip, the entire satellite can be rotated as it passes over area 703 so that area 703 remains within the radar aperture by continuously pointing the antenna at area 703 as the satellite passes over

In order to obtain an extended dwell spotlight acquisition for a target area on Earth, a satellite can be steered electronically and/or mechanically in order to keep a target within the radar aperture for a longer period of time. In an example, this can be achieved by "squinting" the antenna or the whole SAR platform forwards and backwards. In an example, as the satellite approaches the target, it is rotated to point forwards so it can start imaging the target earlier. As it passes the target, the satellite is in the standard side-looking geometry for a brief moment. Once the target is passed, the satellite continues to rotate to keep the target in view by pointing backwards at the target. In the azimuth direction, the imaging geometry needs to be corrected for in a similar manner to the incidence angle in the range direction. Squint angles may go from -15 degrees to +15 degrees (relative to the scene), for example.

In an example, imaging begins at point 711 on line 701. Prior to reaching point 711, the satellite is rotated to point forward by a certain amount. This is known as "squinting" forward. As satellite 700 travels to point 712, it is rotated in order to maintain the antenna pointing at 703. The rotation continues in direction 715 as the satellite passes through point 713, which is point where the satellite is imaging directly perpendicular to its direction of motion along line 701. Satellite 700 continues rotating in direction 715 to keep the target within the radar aperture until it reaches point 714, at which the imaging stops, and the satellite can be recovered to a nominal position. In an example, the duration of the imaging could be greater than 10 seconds and up to as high as 60 seconds. In the examples shown here the imaging was done over approximately 25 seconds.

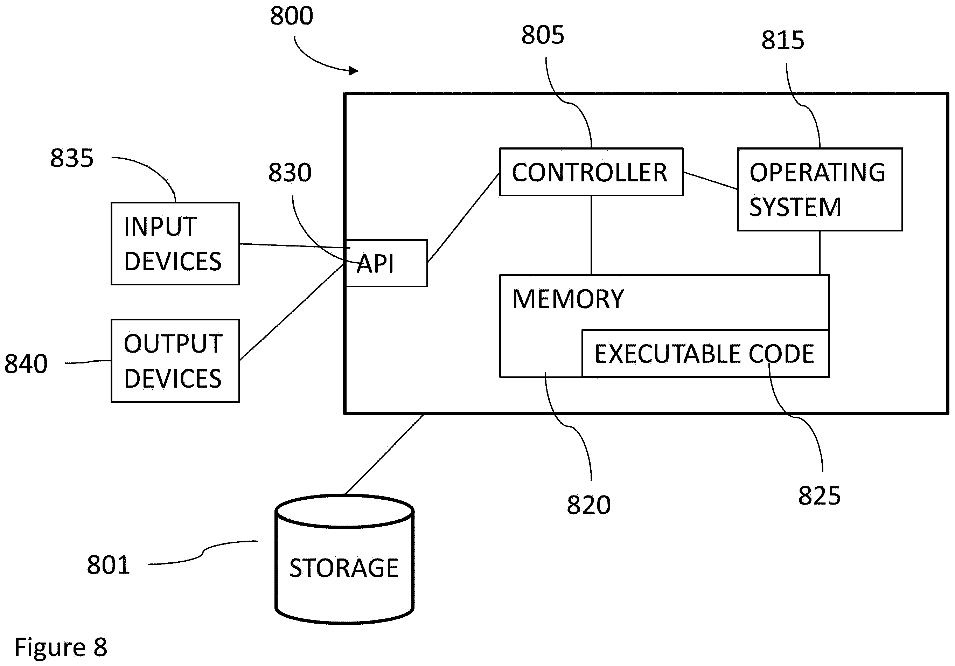

As noted in the foregoing, the processing of the SAR data may be implemented in a computing system, usually at a ground station on Earth but optionally onboard the satellite, or in a distributed system including onboard and ground components. A suitable computing system is described with reference to figure 8 for completeness.

Figure 8 shows a computing system 800 which may include one or more controllers such as controller 805 that may be, for example, a central processing unit processor (CPU), a chip or any suitable processor or computing or computational device, an operating system 815, a memory 820, a storage 801, input devices 835 and output devices 840. One or more processors in one or more controllers such as controller 805 may be configured to carry out methods of processing SAR data as described here. For example, one or more processors within controller 805 may be connected to memory 820 storing software or instructions that, when executed by the one or more processors, cause the one or more processors to carry out a method according to some embodiments of the present invention. Controller 805 or a central processing unit within controller 805 may be configured, for example, using instructions stored in memory 820, to perform the operations shown in figures 2 to 6.

Operating system 815 may be or may include any code segment designed and/or configured to perform tasks involving coordination, scheduling, arbitration, supervising, controlling or otherwise managing operation of computing system 800, for example, scheduling execution of programs. Operating system 815 may be a commercial operating system. Memory 820 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 820 may be a non-transitory processor-readable storage medium that stores instructions and the instructions are executed by controller 805. Memory 820 may be or may include a plurality of possibly different memory units.

Executable code 825 may be any executable code, e.g., an application, a program, a process, task or script. Executable code 825 may be executed by controller 805 possibly under control of operating system 815. Executable code 825 may comprise code for processing SAR data according to the methods described here.

In some implementations more than one computing system 800 may be used. For example, a plurality of computing devices that include components similar to those included in computing system 800 may be connected to a network and used as a computing system.

Storage 801 may be or may include one or more storage components, for example, a hard disk drive, a Compact Disk (CD) drive, a CD-Recordable (CD-R) drive, a universal serial bus (USB) device or other suitable removable and/or fixed storage unit. For example, memory 820 may be a non-volatile memory having the storage capacity of storage 801. Accordingly, although shown as a separate component, storage 801 may be embedded or included in memory 820. Storage 801 or memory 820 may store the images and/or videos described here.

Input to and output from a computing system 800 may be via an API, such as API 830 shown in FIG. 8. The API 830shown in FIG. 8 may operate under the control of the controller 805 executing instructions stored in memory 820. Input to and output from the system via the API may be via an input/output port. Input may comprise SAR data to be processed. Output may comprise images and/or video.

System 800 may include one or more user input devices 835 as are known in the art and one or more output devices such as displays.

The methods described here may be implemented using data from acquired by a satellite configured with an antenna that can point to the observation area and maintain its pointing to the same location for an extended period of time (60 seconds). This is usually far longer than a larger satellite is able to achieve (nominally 2 seconds as ICEYE satellites have a low mass and low moment of inertia thereby permitting antenna and beam pointing to be achieved without expenditure of fuel and using only internal momentum wheels).

The satellite may have a SPOTLIGHT mode of imaging that can maintain a target scene within its receive window even though the range to the target scene has a range that varies considerably. A SPOTLIGHT mode SAR processor, either onboard or on the ground, may combine individual SAR frames into frames of a movie and export them as such.

In any of the embodiments of the invention, the satellite may be travelling in, or configured to travel in a low earth orbit.

The satellite may have both left-looing and right-looking capability.

Any of the computing systems described herein may be combined in a single computing system with multiple functions. Similarly, the functions of any of the computing systems described herein may be distributed across multiple computing systems.

Some operations of the methods described herein may be performed by software in machine readable form e.g. in the form of a computer program comprising computer program code. Thus some aspects of the invention provide a computer readable medium which when implemented in a computing system cause the system to perform some or all of the operations of any of the methods described herein. The computer readable medium may be in transitory or tangible (or non-transitory) form such as storage media include disks, thumb drives, memory cards etc. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The embodiments described above are largely automated. In some examples a user or operator of the system may manually instruct some steps of the method to be carried out.

In the described embodiments of the invention the system may be implemented as any form of a computing and/or electronic system as noted elsewhere herein. For example, the ground station may comprise such a computing and/or electronic system.

The term "computing system" is used herein to refer to any device with processing capability such that it can execute instructions. Those skilled in the art will realise that such processing capabilities may be incorporated into many different devices and therefore the term "computing system" includes PCs, servers, smart mobile telephones, personal digital assistants and many other devices.

It will be understood that the benefits and advantages described above may relate to one embodiment or may relate to several embodiments. The embodiments are not limited to those that solve any or all of the stated problems or those that have any or all of the stated benefits and advantages.

The term "comprising" is used herein to mean including the method steps or elements identified, but that such steps or elements do not comprise an exclusive list and a method or apparatus may contain additional steps or elements.

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples.

It will be understood that the above description is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

Aspects of the foregoing disclosure are described in the following clauses:
1. A method of processing synthetic aperture radar "SAR" data acquired at one or more satellites after the transmission of radio energy pulses from the one or more satellites over a range of frequencies,
   the method comprising:
   forming images using data from respective blocks of the SAR data, wherein each block corresponds to a different frequency range of the transmitted radiation, each range having a different centre frequency, and
   analysing the images for features that appear differently in different images.
2. The method of clause 1 comprising colouring the images using a different colour for each of the different frequency ranges.
3. The method of clause 2 comprising applying colours and range look weightings to the data blocks such that a uniformly scattering object has a consistent response across the full spectrum.
4. The method of clause 2 or clause 3 wherein the order of the colours matches the order of the frequency ranges.
5. The method of any preceding clause wherein the blocks correspond to equal width frequency ranges.
6. The method of any preceding clause wherein the analysing of the images comprises combining the images.
7. The method of clause 6 when dependent on clause 2 wherein combining the images comprises combining the differently coloured images to form a composite image.
8. The method of clause 6 wherein combining the images comprises using each of the images as a frame in a video sequence.
9. The method of any preceding clause, wherein the radio energy pulses each comprise radiation distributed over a predetermined bandwidth, the method comprising dividing the data into the blocks, each block corresponding to a different range of the predetermined bandwidth and each having a different centre frequency.
10. The method of any preceding clause wherein the number of blocks is equal to or greater than 3.
11. The method of any preceding clause wherein the frequency ranges of the blocks are contiguous.
12. The method of any preceding clause wherein the frequency ranges of at least some of the blocks overlap.
13. The method of any preceding clause comprising range shifting the data of all of the blocks while maintaining the relative location of the blocks in the frequency domain.
14. The method of any preceding clause wherein the frequency range is greater than 600MHz.
15. The method of any preceding clause wherein the frequency range is between 600MHz and 1.2GHz.
16. The method of any preceding clause implemented with one or more SAR systems configured to transmit in any of X band, C band, L band, or Ka band.
17. The method of any preceding clause in which the range of frequencies used to obtain the blocks of data spans multiple bands.
18. The method of any preceding clause comprising transmitting the radio energy pulses from the one or more satellites over the range of frequencies.
19. The method of clause 18 in which the radio energy pulses are transmitted from a single satellite.
20. The method of clause 19 in which the radio energy pulses are transmitted in a single pass of the satellite over the earth.
21. The method of clause 20 in which the acquisition is performed using a spotlight mode.
22. The method of clause 21 whereby the spotlight mode is achieved by mechanically rotating the satellite backwards as the satellite passes overhead to extend a time that the target is within the radar aperture.
23. The method of any of clauses 18 tp clause 22 in which the satellite operates in a side-looking mode when transmitting the radio energy pulses.
24. The method of any preceding clause wherein the transmission and/or acquisition of pulses is performed using one or more phased array antennas.
25. A computer readable medium comprising instructions which, when implemented in a computing system, cause the system to implement the method of any preceding clause.
26. Use of the method according to any preceding clause to identify structures having a repeating radar structure, wherein the range of frequencies and/or angle is chosen based on the period of the structure to induce Bragg scattering from the structure.
27. A SAR image formed according to the method of clause 7 or any clause dependent from clause 7.
28. A SAR video formed according to the method of clause 8 or any clause dependent from clause 8.

## Claims

1. A method of processing synthetic aperture radar "SAR" data acquired at one or more satellites after the transmission of radio energy pulses from the one or more satellites over a range of frequencies,
the method comprising:
forming images using data from respective blocks of the SAR data, wherein each block corresponds to a different frequency range of the transmitted radiation, each range having a different centre frequency, and
analysing the images for features that appear differently in different images.

2. The method of claim 1 comprising colouring the images using a different colour for each of the different frequency ranges.

3. The method of claim 2 comprising applying colours and range look weightings to the data blocks such that a uniformly scattering object has a consistent response across the full spectrum.

4. The method of claim 2 or claim 3 wherein the order of the colours matches the order of the frequency ranges.

5. The method of any preceding claim wherein the blocks correspond to equal width frequency ranges.

6. The method of any preceding claim wherein the analysing of the images comprises combining the images.

7. The method of claim 6 when dependent on claim 2 wherein combining the images comprises combining the differently coloured images to form a composite image.

8. The method of claim 6 wherein combining the images comprises using each of the images as a frame in a video sequence.

9. The method of any preceding claim comprising transmitting the radio energy pulses from the one or more satellites over the range of frequencies.

10. The method of claim 9 in which the radio energy pulses are transmitted from a single satellite.

11. The method of claim 10 in which the radio energy pulses are transmitted in a single pass of the satellite over the earth.

12. The method of claim 11 in which the acquisition is performed using a spotlight mode.

13. The method of claim 12 whereby the spotlight mode is achieved by mechanically rotating the satellite backwards as the satellite passes overhead to extend a time that the target is within the radar aperture.

14. A computer readable medium comprising instructions which, when implemented in a computing system, cause the system to implement the method of any preceding claim.

15. A SAR image formed according to the method of claim 7 or any claim dependent from claim 7, or a SAR video formed according to the method of claim 8 or any claim dependent from claim 8.
